**Europäisches Patentamt**

**European Patent Office**

**Office européen des brevets**

(19)

(11) Veröffentlichungsnummer: **0 482 485 A2**

# EUROPÄISCHE PATENTANMELDUNG

(12)

(21) Anmeldenummer: **91117604.8**

(22) Anmeldetag: **16.10.91**

(51) Int. Cl.⁵: **G01S 17/58**

(30) Priorität: **26.10.90 DE 9014814 U**

(43) Veröffentlichungstag der Anmeldung:
**29.04.92 Patentblatt 92/18**

(84) Benannte Vertragsstaaten:
**BE FR GB**

(71) Anmelder: **Mesacon Gesellschaft für Messtechnik mbH**
**Martin-Schmeisser-Weg 15**
**W-4600 Dortmund 50(DE)**

(72) Erfinder: **Grebe, Volker**
**Zur Burkuhle 54**
**W-4630 Bochum(DE)**

(74) Vertreter: **Patentanwälte Wenzel & Kalkoff**
**Flasskuhle 6 Postfach 2448**
**W-5810 Witten(DE)**

(54) **Optisches Gerät zur Messung der Geschwindigkeit oder Länge einer bewegten Oberfläche mittels eines Laserstrahls.**

(57) Die Erfindung betrifft ein optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte dopplerverschobene Streulicht und anderweitiges Licht, beispielsweise nicht doppler-verschobenes Laserlicht oder ein anderes doppler-verschobenes Laserlicht, zur Erzielung einer Schwebung überlagert werden, deren Frequenz ein Maß für die Geschwindigkeit der Oberläche bildet und in Form fortlaufend anfallender Signale in einem Auswertsystem aufgenommen und ausgewertet, insbesondere in einem Zählsystem gezählt wird. Zur Filterung der einer Eingangsfrequenz $F_{ein}$ entsprechenden Signale ist ein Bandpaß, insbesondere ein Quarzfilter-Bandpaß fester Mittenfrequenz, mit einem Mischer und mit einem Frequenzgenerator vorgesehen.

EP 0 482 485 A2

Die Erfindung betrifft ein optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht dopplerverschobenes Laserlicht oder ein anderes doppler-verschobenes Laserlicht, zur Erzielung einer Schwebung überlagert werden, deren Frequenz ein Maß für die Geschwindigkeit der Oberfläche bildet und in Form fortlaufend anfallender Signale in einem Auswertsystem aufgenommen und ausgewertet, insbesondere in einem Zählsystem gezählt wird.

Die optische Baugruppe bekannter Geräte liefert gewöhnlich ein kleines, sehr stark verrauschtes, intermittierendes Signal im HF-Bereich an das Auswertsystem, in dem das Signal zunächst gefiltert werden muß, um den eigentlichen Signalanteil von dem Rauschanteil zu trennen. Zur Reduzierung der Bandbreite des Rauschens wird eine Einengung der Gesamtbandbreite eines verrauschten Signals angestrebt. Auf diese Weise läßt sich das Signalzurauschverhältnis verbessern. Hierfür wird ein Bandpaß verwendet. Da die Frequenz der fortlaufend anfallenden Signale nicht konstant ist, muß die Mittenfrequenz des Bandpaßes entsprechend nachgefahren werden. Es ist folglich ein Bandpaß hoher Selektivität mit variabler Mittenfrequenz erforderlich.

Alternativ wird in der Praxis häufig ein hochselektiver Quarzfilter-Bandpaß bevorzugt, dessen Mittenfrequenz feststeht. Um mit einem solchen Bandpaß ein Signal veränderbarer Frequenz filtern zu können, muß entweder die Bandpaß-Mittenfrequenz über das Spektrum bewegt oder das Spektrum an einer festen Bandpaß-Mittenfrequenz vorbeigeführt werden. Das Vorbeiführen des Spektrums an einer festen Bandpaß-Mittenfrequenz ist als Heterodyn-Verfahren bekannt. Es liefert am Ausgang jedoch eine Ausgangsfrequenz, die gleich der Mittenfrequenz des Bandpaßes ist. Falls man die Steuerspannung des Frequenzgenerators VCO als Ausgangsgröße mißt und auswertet, erreicht man mit diesem System nicht die gewünschte Genauigkeit.

Es besteht daher die Aufgabe, die fortlaufend anfallenden stark verrauschten intermittierenden Signale, die vom Auswertsystem aufgenommen werden, so zu filtern, daß der Signalanteil mit hoher Genauigkeit und mit möglichst geringem Aufwand aus dem Eingangssignal herausgefiltert werden kann.

Als Lösung dieser Aufgabe ist zur Filterung der einer Eingangsfrequenz $F_{ein}$ entsprechenden Signale ein Bandpaß, insbesondere ein Quarzfilter-Bandpaß fester Mittenfrequenz, mit einem ersten Mischer und mit einem Frequenzgenerator vorgesehen ist,

wo die Eingangsfrequenz $F_{ein}$ mit einer durch einen Regler derart kontinuierlich geregelten Hilfsfrequenz $F_{vco}$ mischbar ist,
daß ähnlich wie beim Heterodyn-Verfahren- eine erste Zwischenfrequenz $F_{vco} - F_{ein}$ gebildet wird, deren durch Tiefpaßfilterung erhaltenes unteres Seitenband der festen Mittenfrequenz des Quarzfilterbandpaßes entspricht,
und daß dem ersten Mischer sowie dem ersten Filter ein zweiter Mischer nachgeschaltet ist,
wo die erste Zwischenfrequenz $F_{vco} - F_{ein}$ erneut mit der kontinuierlich geregelten Hilfsfrequenz $F_{vco}$ derart mischbar ist,
daß eine zweite Zwischenfrequenz nach der Gleichung

$$\sin \ ((F_{vco}-F_{ein}).t). \ \sin \ (F_{vco}.t) \ = \ 1/2 \ \cos \ ((-F_{vco} + F_{vco} + F_{ein}).t)-\cos \ ((F_{vco}-F_{ein} + F_{vco}).t)$$

erhalten wird, deren durch Tiefpaßfilterung erhaltene untere Seitenbandfrequenz $F_{USB}$, die durch den Gleichungsteil

$$F_{USB} \ = \ F_{vco} - F_{vco} \ + \ F_{ein}$$

dargestellt ist, unmittelbar der Eingangsfrequenz $F_{ein}$ entspricht.

Nach dererfindungsgemäßen Lösung ist also im Ergebnis ein automatischer Bandpaß vorgesehen, in dem sich die als stark verrauschte Signale erhaltenen Eingangsfrequenzen filtern und in ihrem Signalzurauschabstand wesentlich verbessern und schließlich - und hier liegt der herausragende Vorteil der Neuerung gegenüber dem Stand der Technik - als Signale gewinnen lassen, die unmittelbar der Eingangsfrequenz $F_{ein}$ entsprechen und sich anschließend mit herkömmlichen Methoden in ein TTL-kompatibles Rechtecksignal verwandeln lassen.

Im Gegensatz zum Stand der Technik wird folglich nicht die Steuerspannung des Frequenzgenerators VCO als Ausgangsgröße gemessen und ausgewertet, sondern die im zweiten Mischer gewonnene zweite Zwischenfrequenz, die wie oben dargestellt ist, der ursprünglichen Signalfrequenz automatisch folgt.

Die Erfindung läßt eine hohe Temperaturstabilität zu, wodurch sich die Genauigkeit der Auswertung erhöht. Es ist eine große Bandbreite von 10 MHz gegenüber früher ca. 0,5 MHz vorhanden. Schließlich läßt sich ohne weiteres eine Amplitudenkonstanz der Ausgangssignale ohne Amplitudenregelung erreichen. Die Filter haben eine konstante Gruppenlaufzeit und damit ein gutes Impulsverhalten.

Erfindungsgemäß wird zum Vorbeiführen des Spektrums an der festen Bandpaßmittenfrequenz zunächst in dem ersten Mischer das der Eingangs-

frequenz $F_{ein}$ entsprechende Signal mit der Hilfsfrequenz $F_{vco}$ gemischt. Die Hilfsfrequenz $F_{vco}$ wird von einem spannungsgesteuerten Frequenzgenerator VCO abgegeben, wobei ein Regler den Wert der Hilfsfrequenz $F_{vco}$ kontinuierlich so regelt, daß die Differenz $F_{vco}$ - $F_{ein}$ stets der Bandmittenfrequenz entspricht. Es entsteht folglich ein Frequenzspektrum der Größe :

$$\sin (F_{ein} . t) . \sin (F_{vco} . t) = 1/2 \cos (( + F_{vco} - F_{ein}) . t) - \cos ((F_{vco} + F_{ein}) .t)$$

Dabei entspricht der Ausdruck $F_{vco}$ - $F_{ein}$ der gewünschten ersten Zwischenfrequenz, die aus dem vorstehenden Frequenzspektrum durch Bandpaßfilterung gewonnen wird.

Da die Frequenz $F_{vco}$ von dem Regler kontinuierlich derartig beeinflußt wird, daß das untere Seitenband bzw. die erste Zwischenfrequenz $F_{vco}$ - $F_{ein}$ stets der Mittenfrequenz des Quarzbandpaßes entspricht, kann die erste Zwischenfrequenz $F_{vco}$ - $F_{ein}$ den Bandpaß passieren. Damit ist das Meßsignal bis zu max. 90 dB in seinem Signalzurauschverhältnis verbessert. Es besitzt allerdings eine veränderte Frequenz, die von der Eingangsfrequenz $F_{ein}$ abweicht, so daß es nicht ohne weiteres weiter auswertbar ist.

Erfindungsgemäß wird jedoch, wie bereits dargestellt, dieses Signal, nämlich die erste Zwischenfrequenz nochmals mit der Hilfsfrequenz $F_{vco}$ in einem zweiten Mischer gemischt, und hierbei ergibt sich, wie ebenfalls dargestellt, unmittelbar ein der Eingangsfrequenz $F_{ein}$ entsprechendes, nun in seinem Signalzurauschverhältnis erheblich verbessertes Signal zur Weitergabe an die Auswerteinheit, in der es in ein TTL-kompatibles Rechtecksignal verwandelt wird.

Durch die zweite Mischung vermeidet man auch, daß die Genauigkeit des VCO-Regelkreises in das Ergebnis eingeht. Denn die Hilfsfrequenz $F_{vco}$ ist in dem Ausgangssignal, das der unteren Seitenbandfrequenz der zweiten Zwischenfrequenz entspricht, nicht mehr enthalten.

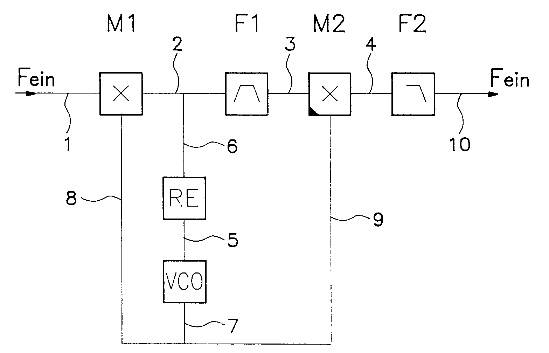

Ein Ausführungsbeispiel der Neuerung wird nachstehend mit Bezug auf die Zeichnung erläutert.

Es versteht sich von selbst, daß in der dargestellten Schaltung nur die wichtigsten Elemente, die unmittelbar der Veranschaulichung eines Ausführungsbeispiels der Neuerung dienen, enthalten sind.

Eine Eingangsleitung 1 führt zu einem ersten Mischer M1, dem ein erster Filter F1 über die Leitung 2 nachgeschaltet ist. Der Filter F1 ist über eine Leitung 3 mit einem zweiten Mischer M2 verbunden, dem ein zweiter Filter F2 über eine Leitung 4 nachgeschaltet ist. Ein mit einem Regler RE über eine Leitung 5 verbundener und kontinuierlich geregelter Frequenzgenerator VCO ist über Leitungen 7, 8 mit dem ersten Mischer M1 sowie über die Leitung 7 und eine weitere Leitung 9 mit dem zweiten Mischer M2 in der aus der Zeichnung ersichtlichen Weise verbunden. Außerdem verbindet eine Leitung 6 den Regler RE mit der Leitung 2 zwischen dem ersten Mischer M1 und dem ersten Filter F1.

Über die Eingangsleitung 1 gelangen die von der optischen Einheit gewonnenen Signale, die der Eingangsfrequenz $F_{ein}$ entsprechen, in den ersten Mischer M1, wo sie mit einer Hilfsfrequenz $F_{vco}$ gemischt werden, die kontinuierlich von dem Frequenzgenerator VCO abgegeben wird. Hierbei ergibt sich folgendes Frequenzspektrum:

$$\sin (F_{ein} .t). \sin (F_{vco} .t) = 1/2 \cos ((F_{vco} - F_{ein}).t ) - \cos ((F_{vco} + F_{ein}).t)$$

Das Ergebnis dieser Mischung ist folglich ein unteres Seitenband ($F_{vco}$ - $F_{ein}$) und ein oberes Seitenband ($F_{vco}$ + $F_{ein}$). Der Regler RE beeinflußt die Hilfsfrequenz $F_{vco}$ des Frequenzgenerators VCO derart, daß die Frequenz des unteren Seitenbandes ($F_{vco}$ - $F_{ein}$) gleich der Mittenfrequenz des Quarzbandpaßes wird, der in dem dargestellten System verwendet aber nicht gesondert dargestellt ist. Dadurch kann die erste Zwischenfrequenz $F_{vco}$ - $F_{ein}$ den Bandpaß passieren, und das Meßsignal ist in seinem Signalzurauschverhältnis verbessert. Die Frequenz des oberen Seitenbandes $F_{vco}$ + $F_{ein}$ ist durch den ersten Filter F1 herausgefiltert worden.

Nun erreicht die Zwischenfrequenz $F_{vco}$ - $F_{ein}$ den zweiten Mischer M2, wo erneut eine Mischung mit der Hilfsfrequenz $F_{vco}$ erfolgt:

$$\sin ((F_{vco}-F_{ein}).t). \sin (F_{vco}.t) = 1/2 \cos ((-F_{vco} + F_{vco} + F_{ein}).t) - \cos ((F_{vco}-F_{ein} + F_{vco}).t)$$

Auch von dieser Frequenz bzw. Signalmischung ist nur das untere Seitenband von Interesse, und deshalb wird durch den zweiten Filter F2 die obere Seitenbandfrequenz mit der Frequenz $F_{vco}$ + $F_{ein}$ herausgefiltert. Bei dieser Tiefpaßfilterung bleibt nur die untere Seitenbandfrequenz über:

$$F_{USB} = F_{vco} - F_{vco} + F_{ein}$$
$$F_{USB} = F_{ein}$$

Auf diese Weise verläßt das Signal, das in seinem Signalzurauschverhältnis in dem für die weitere Auswertung erforderlichen Maß verbessert ist, den Bandpaß über die Leitung 10 mit einer Frequenz, die exakt der Eingangsfrequenz $F_{ein}$ entspricht.

Mit bekannten Mitteln kann nun die TTL-Kompatibilität des Signals hergestellt werden.

**Patentansprüche**

1. Optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht dopplerverschobenes Laserlicht oder ein anderes dopplerverschobenes Laserlicht, zur Erzielung einer Schwebung überlagert werden, deren Frequenz ein Maß für die Geschwindigkeit der Oberfläche bildet und in Form fortlaufend anfallender Signale in einem Auswertsystem aufgenommen und ausgewertet, insbesondere in einem Zählsystem gezählt wird, dadurch **gekennzeichnet,** daß zur Filterung der einer Eingangsfrequenz $F_{ein}$ entsprechenden Signale ein Bandpaß, insbesondere ein Quarzfilterbandpaß fester Mittenfrequenz, mit einem ersten Mischer (M1) und mit einem Frequenzgenerator (VCO) vorgesehen ist, wo die Eingangsfrequenz $F_{ein}$ mit einer durch einen Regler (RE) derart kontinuierlich geregelten Hilfsfrequenz $F_{vco}$ mischbar ist, daß - ähnlich wie beim Heterodyn-Verfahren - eine erste Zwischenfrequenz $F_{vco} - F_{ein}$ gebildet wird, deren durch Tiefpaßfilterung mittels eines ersten Filters (F1) erhaltenes unteres Seitenband der festen Mittenfrequenz des Quarzfilter-Bandpaßes entspricht, und daß dem ersten Mischer (M1) sowie dem ersten Filter (F1) ein zweiter Mischer (M2) nachgeschaltet ist, wo die erste Zwischenfrequenz $F_{vco} - F_{ein}$ erneut mit der kontinuierlich geregelten Hilfsfrequenz $F_{vco}$ derart mischbar ist, daß eine zweite Zwischenfrequenz nach der Gleichung

$$\sin((F_{vco}-F_{ein}).t). \sin(F_{vco}.t) = 1/2 \cos((-F_{vco} + F_{vco} + F_{ein}).t) - \cos((F_{vco}-F_{ein} + F_{vco}).t)$$

erhalten wird, deren untere durch Tiefpaßfilterung mittels eines zweiten Filters (F2) erhaltene Seitenbandfrequenz $F_{USB}$, die durch den Gleichungsteil

$$F_{USB} = F_{vco} - F_{vco} + F_{ein}$$

dargestellt ist, unmittelbar der Eingangsfrequenz $F_{ein}$ entspricht.